# EUROPEAN PATENT APPLICATION

(11) **EP 4 744 992 A1**
(43) Date of publication of application: **20.05.2026**
(21) Application number: 25215483.6
(22) Date of filing: 13.11.2025
(51) Int. Cl.: B60W 30/09, B60W 30/095, B60W 40/04, B60W 50/00, B60W 60/00

(54) **PREDICTING THIRD-PARTY COLLISIONS FOR AUTONOMOUS VEHICLES**

(30) Priority: 13.11.2024 US 202418946300
(71) Applicant: WAYMO LLC, Mountain View, CA 94043 (US)
(72) Inventor: KUNZ, Clayton, Mountain View, 94043 (US); LAM, Chi Pang, Mountain View, 94043 (US); BUCHANAN, Michael Ross Strahler, Mountain View, 94043 (US); VELLANKI, Ram, Mountain View, 94043 (US); OLSON, Sy Kelley, Mountain View, 94043 (US); SHEU, Kevin Chihpei, Mountain View, 94043 (US)
(74) Representative: Anderson, Oliver Ben

(57) **Abstract**

The described aspects and implementations enable reduced use in computational resources by an autonomous vehicle (AV) by predicting third-party collisions for an AV. A method includes obtaining object indications for objects in a driving environment of an AV. An object indication may include a shape definition and one or more predicted future locations of a corresponding object. The method includes projecting each shape definition onto each predicted future location of the one or more predicted future locations of the corresponding object. The method includes determining, based on projected shape definitions of the objects, that the projected shape definitions of at least two objects overlap. The method includes, responsive to the overlap between at least one of the projected shape definitions meeting a collision criterion, modifying the operation of the AV to avoid an area of the overlapped projected shape definitions of the least two objects.

## Description

### TECHNICAL FIELD

The instant specification generally relates to autonomous vehicles (AVs). More specifically, the instant specification relates to predicting third-party collisions for AVs.

### BACKGROUND

Autonomous vehicles (AVs), whether fully autonomous or partially self-driving, often operate by sensing an outside environment with various sensors (e.g., radar, optical, audio, humidity, etc.). This outside environment may include other objects in the environment, some of which are mobile. Such objects can include other vehicles, cyclists, pedestrians, animals, etc.

### BRIEF DESCRIPTION OF THE DRAWINGS

The present disclosure is illustrated by way of examples, and not by way of limitation, and can be more fully understood with references to the following detailed description when considered in connection with the figures, in which:
**FIG. 1** depicts a block diagram of an example autonomous vehicle (AV) capable of predicting third-party collisions for AVs, in accordance with some implementations of the present disclosure.
**FIG. 2** depicts a flowchart of an example method for predicting third-party collisions for AVs, in accordance with some implementations of the present disclosure.
**FIG. 3** depicts a flowchart of another example method for predicting third-party collisions for AVs, in accordance with some implementations of the present disclosure.
**FIG. 4** depicts a top-down view of an example driving environment, in accordance with some implementations of the present disclosure.
**FIG. 5** depicts a top-down view of an example driving environment, in accordance with some implementations of the present disclosure.
**FIG. 6** depicts a block diagram of an example computer device capable of predicting third-party collisions for AVs, in accordance with some implementations of the present disclosure.

### SUMMARY

In one implementation, disclosed is a method for predicting third-party collisions for autonomous vehicles (AVs), which may include predicting third-party collisions in a driving environment of an AV. The method includes obtaining one or more object indications for one or more objects in a driving environment of an AV. Each object indication of the one or more object indications may include a shape definition of the corresponding object of the one or more objects and one or more predicted future locations of the corresponding object. The method includes projecting, for each object of the one or more objects, the shape definition of the corresponding object onto each predicted future location of the one or more predicted future locations of the corresponding object. The method includes determining, based on projected shape definitions of the one or more objects, that the projected shape definitions of at least two objects of the one or more objects overlap. The method includes, responsive to an overlap between the projected shape definitions of the least two objects meeting a collision criterion, modifying operation of the AV to avoid an area of the overlapped projected shape definitions of the least two objects.

In one implementation, disclosed is a system for predicting third-party collisions for AVs. The system includes a memory and a processing device coupled to the memory. The processing device is configured to perform operations. The operations include obtaining one or more object indications for one or more objects in a driving environment of an AV. Each object indication of the one or more object indications may include a shape definition of the corresponding object of the one or more objects and one or more predicted future locations of the corresponding object. The operations include projecting, for each object of the one or more objects, the shape definition of the corresponding object onto each predicted future location of the one or more predicted future locations of the corresponding object. The operations include determining, based on projected shape definitions of the one or more objects, that projected shape definitions of at least two objects of the one or more objects overlap. The operations include, responsive to an overlap between the projected shape definitions of the least two objects meeting a collision criterion, modifying operation of the AV to avoid an area of the overlapped projected shape definitions of the least two objects.

In one implementation, disclosed is another method for predicting third-party collisions for AVs. The method includes obtaining one or more object indications for one or more objects in a driving environment of an AV. Each object indication of the one or more object indications may include a shape definition of the corresponding object of the one or more objects. A first object indication of the one or more object indications may further include one or more predicted future locations of a first object of the one or more objects. The method includes projecting the shape definition of the first object onto each predicted future location of the one or more predicted future locations of the first object. The method includes determining that the projected shape definition of the first object and the shape definition of a second object of the one or more objects overlap. The method includes, responsive to the projected shape definition of the first object and the shape definition of the second object meeting a collision criterion, modifying operation of the AV to avoid an area of the projected shape definition of the first object and the shape definition of the second object.

### DETAILED DESCRIPTION

An autonomous vehicle, or a partially autonomous vehicle such as one deploying various driving assistance features, (AV), often shares a driving environment with other road users or objects. Such other road users or objects may include mobile objects (e.g., vehicles, pedestrians, animals, etc.) or stationary objects (e.g., traffic signs, construction cones, road debris, etc.). Sometimes, two or more objects may collide in the driving environment, and the AV may need to avoid the collided objects to navigate the driving environment safely.

Aspects and implementations of the present disclosure address these and other challenges of existing AV systems. One aspect of the present disclosure includes a third-party collision prediction system that predicts a collision between two or more objects in the driving environment of an AV and causes the AV to avoid the predicted collision. The system obtains the shape definitions of the objects (e.g., top-down polygon outlines of the objects) and predicted future locations of the objects (e.g., as indicated by predicted trajectories of the objects). The system projects the shape definitions onto the predicted future locations of the respective objects. The system determines if any of the projected shape definitions overlap, which may indicate a possible future collision of the objects corresponding to the overlapping shape definitions. If an overlap of the projected shape definitions is detected and the overlapping projected shape definitions meet a collision criterion, the system may cause the AV to modify its operation to avoid the overlapping projected shape definitions. The collision criterion may be based, for example, on an indication of confidence in received relevant information and collision prediction and/or a correlation between the predicted collision and a future operation of the AV, thereby assisting in preventing the AV from reacting to collisions that the system may have predicted based on incomplete information, predicted collisions that are unlikely to occur, or predicted collisions that are unlikely to affect the operation of the AV.

One advantage of the techniques and systems disclosed herein includes, but is not limited to, an AV being able to predict the collision of objects in a driving environment of the AV and avoiding the predicted collision. Another advantage includes reduced use in computational resources by the AV. Because the AV uses a collision criterion to reduce the AV's reaction to certain types of predicted collisions (e.g., a collision whose prediction was based on incomplete data), the AV does not use computational resources to generate reaction operations for such predicted collisions. Such reduced use of computational resources can include, but is not limited to reduced processing device usage, memory usage, storage space usage, and other reduction in the use of computational resources associated with the AV.

In those instances where the description of implementations refers to autonomous vehicles, it should be understood that similar techniques can be used in various driver assistance systems that do not rise to the level of fully autonomous driving systems. More specifically, disclosed techniques can be used in Society of Automotive Engineers (SAE) Level 2 driver assistance systems that implement steering, braking, acceleration, lane centering, adaptive cruise control, etc., as well as other driver support. Likewise, the disclosed techniques can be used in SAE Level 3 driving assistance systems capable of autonomous driving under limited (e.g., highway) conditions. In such systems, fast and accurate detection and tracking of mobile objects can be used to inform the driver of the approaching objects, with the driver making the ultimate driving decisions (e.g., in SAE Level 2 systems), or to make certain driving decisions (e.g., in SAE Level 3 systems), such as reducing speed, changing lanes, etc., without requesting driver's feedback.

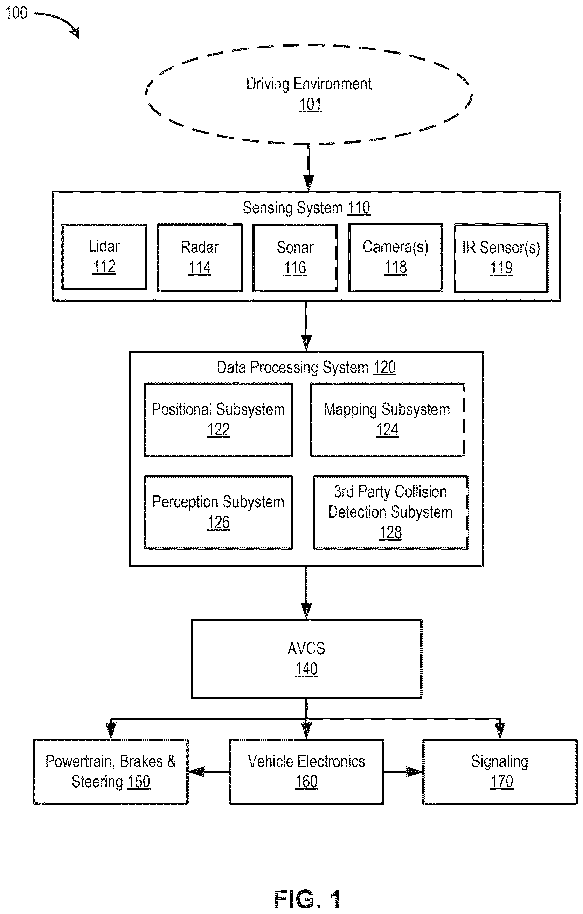

**FIG. 1** is a diagram illustrating components of an example AV 100 capable of predicting third-party collisions for AVs 100, in accordance with some implementations of the present disclosure. AVs 100 can include motor vehicles (cars, trucks, buses, motorcycles, all-terrain vehicles, recreational vehicles, any specialized farming or construction vehicles, and the like), aircraft (planes, helicopters, drones, and the like), naval vehicles (ships, boats, yachts, submarines, and the like), or any other self-propelled vehicles (e.g., robots, factory or warehouse robotic vehicles, sidewalk delivery robotic vehicles, etc.) capable of being operated in a self-driving mode (without a human input or with a reduced human input).

An environment 101 around the AV 100 (sometimes referred to as the "driving environment") can include any objects (animated or non-animated) located outside the AV 100, such as roadways, buildings, trees, bushes, sidewalks, bridges, mountains, other vehicles, pedestrians, animals, and so on. The driving environment 101 can be urban, suburban, rural, and so on. In some implementations, the driving environment 101 can be an off-road environment (e.g., farming or other agricultural land). In some implementations, the driving environment can be an indoor environment, (e.g., the environment of an industrial plant, a shipping warehouse, a hazardous area of a building, and so on). In some implementations, the driving environment 101 can be substantially flat, with various objects moving parallel to a surface (e.g., parallel to the surface of the Earth). In other implementations, the driving environment 101 can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, the "driving environment" can include any possible flying environment of an aircraft or a marine environment of a naval vessel. The objects of the driving environment 101 can be located at any distance from the AV 100, from close distances of several feet (or less) to several miles (or more).

As described herein, in a semi-autonomous or partially autonomous driving mode, even though the AV 100 assists with one or more driving operations (e.g., steering, braking and/or accelerating to perform lane centering, adaptive cruise control, advanced driver assistance systems (ADAS), or emergency braking), the human driver is expected to be situationally aware of the AV's 100 surroundings and supervise the assisted driving operations. Here, even though the AV 100 may perform all driving tasks in certain situations, the human driver is expected to be responsible for taking control as needed.

Although, for brevity and conciseness, various systems and methods may be described below in conjunction with AVs 100, similar techniques can be used in various driver assistance systems that do not rise to the level of fully autonomous driving systems. In the United States, the SAE have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver assistance systems that implement steering, braking, acceleration, lane centering, adaptive cruise control, etc., as well as other driver support. The disclosed systems and methods can be used in SAE Level 3 (L3) driving assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example AV 100 can include a sensing system 110. The sensing system 110 can include various electromagnetic (e.g., optical) and non-electromagnetic (e.g., acoustic) sensing subsystems and/or devices. The sensing system 110 can include a radar 114 (or multiple radars 114), which can be any system that utilizes radio or microwave frequency signals to sense objects within the driving environment 101 of the AV 100. The radar(s) 114 can be configured to sense both the spatial locations of the objects (including their spatial dimensions) and velocities of the objects (e.g., using Doppler shift technology). Hereinafter, "velocity" refers to both how fast the object is moving (the speed of the object) as well as the direction of the object's motion. The sensing system 110 can include a lidar 112, which can be a laser-based unit capable of determining distances to the objects and velocities of the objects in the driving environment 101. Each of the lidar 112 and radar 114 can include a coherent sensor, such as a frequency-modulated continuous-wave (FMCW) lidar or radar sensor. For example, radar 114 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 or radars 114 can be mounted on the AV 100.

Lidar 112 can include one or more light sources producing and emitting signals and one or more detectors of the signals reflected back from the objects. In some implementations, lidar 112 can perform a 360-degree scan in a horizontal direction. In some implementations, lidar 112 can be capable of spatial scanning along both the horizontal and vertical directions. In some implementations, the field of view can be up to 90 degrees in the vertical direction (e.g., with at least a part of the region above the horizon being scanned with radar signals). In some implementations, the field of view can be a full sphere (consisting of two hemispheres).

The sensing system 110 can further include one or more cameras 118 configured to capture images of the driving environment 101. The images can be two-dimensional projections of the driving environment 101 (or parts of the driving environment 101) onto a projecting surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more sonars 116, which can be ultrasonic sonars, in some implementations.

The AV 100 can include a data processing system 120. The data processing system 120 may include one or more computers or computing devices. The data processing system 120 may include hardware or software that receives data from the sensing system 110, processes the received data, and determines how the AV 100 should operate in the driving environment 101. In some implementations, the data processing system 120 can receive non-electromagnetic data, such as audio data (e.g., ultrasonic sensor data, or data from a microphone picking up emergency vehicle sirens), temperature sensor data, humidity sensor data, pressure sensor data, meteorological data (e.g., wind speed and direction, precipitation data), and the like.

The data processing system 120 can include a positioning subsystem 122. The positioning subsystem 122 uses positioning data (e.g., global positioning system (GPS) data, inertial measurement unit (IMU) data, or other positioning data) to help accurately determine the location of the AV 100. The data processing system 120 may include a mapping subsystem 124. The mapping subsystem 124 may obtain or calculate map data (e.g., GPS data, geographic information systems (GIS) data, satellite data, traffic data, or other data) that may provide map information to the AV 100. In some implementations, the AV 100 may receive the positioning data or map data over a data network (e.g., a cellular network) from one or more servers. As such, the AV 100 may store temporary positioning data or map data, e.g., data relevant to the geographic area where the AV 100 is located.

The data processing system 120 can include a perception subsystem 126. The perception subsystem 126 may be configured to use data received from the sensing system 110 to detect objects in the driving environment and determine information about the objects. The information about the objects may include the size, shape, location, velocity, acceleration, of an object. The data processing system 120 may include a third-party collision detection subsystem 128. The third-party collision detection subsystem 128 may be configured to use data received from the perception subsystem 126 (e.g., data indicating the shapes and predicted future locations of objects in the driving environment 101) to predict collisions between objects in the driving environment 101. In some implementations, the perception subsystem 126 and/or the third-party collision detection subsystem 128 are configured to generate an output usable by the AV control system (AVCS) 140, as discussed herein.

The data processed or generated by the data processing system 120, including the perception subsystem 126 and/or the third-party collision detection subsystem 128, can be used by the AVCS 140 of the AV 100. The AVCS 140 can include one or more algorithms that plan how the AV 100 is to behave in various driving situations and environments. For example, the AVCS 140 can include a navigation subsystem for determining a global driving route to a destination point. The AVCS 140 can also include a driving path selection subsystem for selecting a particular path through the immediate driving environment 101, which can include selecting a traffic lane, negotiating traffic congestion, choosing a place to make a U-turn, selecting a trajectory for a parking maneuver, and so on. The AVCS 140 can also include an obstacle avoidance subsystem for safe avoidance of various objects or other obstructions (rocks, stalled vehicles, a jaywalking pedestrian, and so on) within the driving environment 101 of the AV 100. The obstacle avoidance subsystem can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of the AVCS 140 can generate control outputs for use by various systems and components of the AV 100, such as the powertrain, brakes, and steering 150, vehicle electronics 160, signaling 170, and other systems and components not explicitly shown in **FIG. 1****.** These systems and components may modify the operations of the AV 100 based on the control output. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, an inside lighting system, a dashboard notification system, a passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 are first delivered to the vehicle electronics 160, which generates commands to the powertrain, brakes, and steering 150 and/or signaling 170.

In one example, the AVCS 140 can determine that an obstacle identified by the data processing system 120 is to be avoided by decelerating the vehicle until a safe speed is reached, followed by steering the vehicle around the obstacle. The AVCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the AVCS 140 can output instructions to the powertrain, brakes, and steering 150 to resume the previous speed settings of the vehicle.

As used herein, the term "object" or "objects" can include any entity, item, device, body, or article (animate or inanimate) located outside the AV 100, such as other vehicles, cyclists, pedestrians, animals, roadways, buildings, trees, bushes, sidewalks, bridges, mountains, piers, banks, landing strips, or other things.

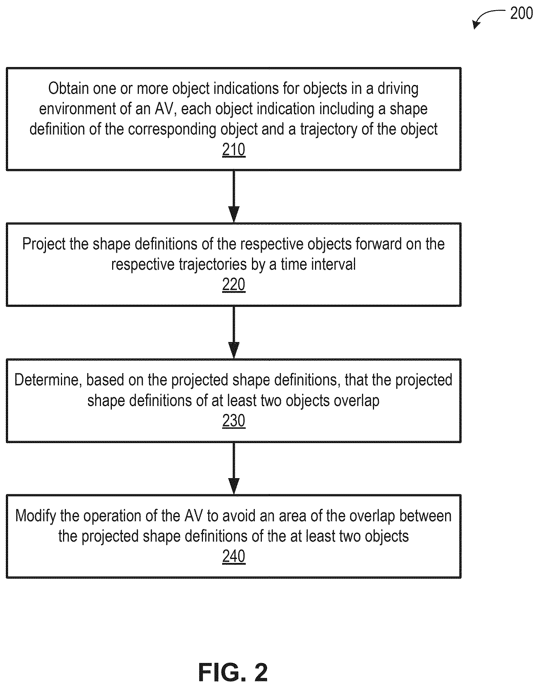

**FIG. 2** is a flowchart illustrating one embodiment of a method 200 for predicting third-party collisions for AVs 100, in accordance with some implementations of the present disclosure. A processing device, having one or more central processing units (CPU(s)), one or more graphics processing units (GPU(s)), and/or memory devices communicatively coupled to the CPU(s) and/or GPU(s), can perform the method 200 and/or each of their individual functions, routines, subroutines, or operations. The method 200 can be directed to systems and components of a vehicle. In some implementations, the vehicle can be an AV, such as the AV 100 of **FIG. 1****.** In some implementations, the vehicle can be a driver-operated vehicle equipped with driver assistance systems, e.g., Level 2 or Level 3 driver assistance systems, that provide limited assistance with specific vehicle systems (e.g., steering, braking, acceleration, etc. systems) or under limited driving conditions (e.g., highway driving). The method 200 can be used to improve performance of the AVCS 140. In certain implementations, a single processing thread can perform the method 200. Alternatively, two or more processing threads can perform the method 200, each thread executing one or more individual functions, routines, subroutines, or operations of the method 200. In an illustrative example, the processing threads implementing the method 200 can be synchronized (e.g., using semaphores, critical sections, and/or other thread synchronization mechanisms). Alternatively, the processing threads implementing the method 200 can be executed asynchronously with respect to each other. Various operations of the method 200 can be performed in a different (e.g., reversed) order compared with the order shown in **FIG. 2****.** Some operations of the method 200 can be performed concurrently with other operations. Some operations can be optional. In some implementations, the third-party collision detection subsystem 128 may perform the method 200.

At block 210, processing logic obtains one or more object indications for one or more objects in a driving environment 101 of an AV 100. An object indication may include data indicating information about a corresponding object in the driving environment 101. Each object indication may include a shape definition of the corresponding object and one or more predicted future locations of the corresponding object. In some implementations, obtaining the one or more object indications may include obtaining the one or more object indications from the perception subsystem 126.

In one implementation, a shape definition of a corresponding object may include a top-down polygon outline of the corresponding object. The top-down polygon outline of the object may include a polygon that outlines the shape of the corresponding object when the object is viewed from above. The shape of the corresponding object may include the shape of the object's portion that can collide with a vehicle. In some implementations, the shape of the corresponding object does not include the shape of the object's portion that cannot result in a collision with a vehicle. For example, the shape definition of a traffic light may include an outline of the pole portion of the traffic light and may not include the portion of the traffic light that overhangs the road (e.g., because vehicles are not likely to collide with the overhanging portion because of the height of that portion).

In some implementations, the one or more predicted future locations of the corresponding object may be a trajectory of the corresponding object. A trajectory of the corresponding object may include a velocity of the object and the predicted path the object will travel in the driving environment 101. The perception subsystem 126 may generate the one or more predicted future locations based on data from the sensing system 110 of the AV 100, which may include using a trajectory subsystem to generate a trajectory. In one or more implementations, the one or more predicted future locations may include a distribution of trajectories of the corresponding object. The distribution of trajectories may include multiple trajectories and, for each trajectory, a probability corresponding to that trajectory. The probability may indicate a probability that the corresponding trajectory will be the trajectory of the object.

At block 220, processing logic projects, for each object of the plurality of objects, the shape definition of the corresponding object onto each predicted future location of the one or more predicted future locations of the corresponding object. Projecting the shape definition of an object onto a predicted future location of the object may include placing the shape definition at the predicted future location. The shape definition at the predicted future location may be referred to as the "projected shape definition."

In one implementation, where the one or more predicted future locations form a trajectory of the corresponding object, the third-party collision detection subsystem 128 may use the velocity and the path of the corresponding object's trajectory to calculate the location of the shape definition corresponding to an object after the time interval has passed. In some implementations, the time interval may be 125 milliseconds (ms). In other implementations, the time interval may be 100 ms, 200 ms, 300 ms, or some other amount of time.

At block 230, processing logic determines, based on projected shape definitions of the one or more objects, that the projected shape definitions of at least two objects of the plurality of objects overlap. In one implementation, the third-party collision detection subsystem 128 may perform a collision detection operation on a pair of projected shape definitions objects of the one or more projected shape definitions. The output of the collision detection operation may include data indicating whether the pair of projected shape definitions overlap, which respective portions of the projected shape definitions overlap, or other data associated with a collision of the projected shape definitions. Responsive to at least a portion of a first projected shape definition of the pair of projected shape definitions overlapping with a second projected shape definition of the pair, the third-party collision detection subsystem 128 may determine that the two projected shape definitions overlap, and the third-party collision detection subsystem 128 can identify the location and/or the size of the area of overlap. The overlap of the two projected shape definitions may be a partial overlap or a complete overlap. The third-party collision detection subsystem 128 may perform a pairwise comparison of two or more of the projected shape definitions to determine if any of the projected shape definitions overlap.

At block 240, processing logic determines whether the overlap between the projected shape definitions of the at least two objects (as determined in block 230, above) meets a collision criterion. Responsive to the overlap meeting the collision criterion, processing logic modifies the operation of the AV 100 to avoid an area of the overlapped projected shape definitions of the at least two objects. Modifying the operation of the AV 100 may include the third-party collision detection subsystem 128 providing a command to the AVCS 140 to avoid the area of the overlapped projected shape definitions, which may include avoiding the locations of the projected shape definitions of the at least two objects. The command may include the location, size, or other information about the area of overlap. The AVCS 140 may use the obstacle avoidance subsystem to modify a current driving path of the AV 100 to avoid the area of overlap.

In some implementations, the AV 100 may not react or change its operation in response to a predicted collision between two objects in the driving environment 101. For example, the AV 100 may not react to a predicted collision that is not likely to interfere with the current planned driving path of the AV 100. In another example, the AV 100 may not react to a predicted collision where the prediction was based on incomplete data, uncertain data, or an amount of data that is insufficient to make an accurate prediction of a collision. The collision criterion may indicate whether the AV 100 is recommended to change its operation in response to a predicted collision.

In one implementation, the collision criterion may include a confidence value associated with an object of the at least two objects being above a threshold confidence value. The confidence value may indicate a level of confidence regarding a characteristic of the object. The characteristic of the object may include a location of the object, which may include the current location of the object or a predicted future location of the object. The characteristic of the object may include the shape or size of the shape definition of the object. The characteristic of the object may include a trajectory of the object, which may include the current trajectory of the object or a predicted future trajectory of the object. The characteristic of the object may include other data about the object.

In some implementations, the third-party collision detection subsystem 128 may obtain a confidence value associated with an object of the at least two objects. For example, the third-party collision detection subsystem 128 may obtain the confidence value from the perception subsystem 126. The third-party collision detection subsystem 128 may calculate the confidence value (e.g., as part of projecting the shape definition of the object forward on the object's trajectory in block 220). The confidence value being below the threshold confidence value may indicate that the perception subsystem 126 or the third-party collision detection subsystem 128 does not have reliable information about the object or its behavior in the driving environment. For example, the confidence value may be low because the perception subsystem 126 or the third-party collision detection subsystem 128 has not observed the object for a sufficient amount of time to accurately predict the object's behavior. In another example, the perception subsystem 126 or the third-party collision detection subsystem 128 may not have sufficient data from the sensing system 110 to predict the object's behavior (e.g., because the third-party collision detection subsystem 128 cannot accurately determine the shape of the object).

In some implementations, the collision criterion may include the projected shape definitions of the at least two objects overlapping by a threshold amount. The threshold amount may include a certain portion of at least one of the projected shape definitions (e.g., 3% of the projected shape definition, 5% of the projected shape definition, 8% of the projected shape definition, 10% of the projected shape definition, or some other amount of the projected shape definition). The threshold amount may include the size of overlap (e.g., 1 square foot (approx. 0.093 square meters), 2 square feet (approx. 0.186 square meters), 3 square feet (approx. 0.279 square meters), or some other size).

In one or more implementations, the collision criterion may include a distance between the AV 100 and the overlapped projected shape definitions of the least two objects being less than a threshold distance. In some implementations, the distance between the AV 100 and the overlapped projected shape definitions of the least two objects may include a distance between a future location of the AV 100 and the overlapped projected shape definitions of the least two objects. The future location of the AV 100 may include the location of the AV 100 at a time corresponding to the respective predicted future location of the at least two objects. In some implementations, the threshold distance may include a predetermined distance. The predetermined distance may include 10 feet (approx. 3.048 meters), 12 feet (approx. 3.658 meters), 15 feet (approx. 4.572 meters), 20 feet (approx. 6.096 meters), 24 feet (approx. 7.315 meters), or some other distance. The threshold distance may include a number of road lane widths in the driving environment 101 (e.g., 1 lane width, 1.5 lane widths, 2 widths, 2.7 widths, or some other number of road lane widths). The threshold distance may include a portion of the width of the road where the AV 100 is driving (e.g., 10% of the width of the road, 20% of the width of the road, 30% of the width of the road, or some other portion of the road width).

In one implementation, the collision criterion may include the predicted future locations of the overlapping projected shape definitions corresponding to the same time. A predicted future location may correspond to a future time, which may include the time at which the object is predicted to be at the predicted future location. If the projected shape definitions of the at least two objects overlap, but the objects would be at their respective predicted future locations at different times, then the third-party collision detection subsystem 128 may determine that the at least two objects will not collide at those predicted future locations, and the collision criteria may not be met.

In some implementations, an area of overlap between the projected shape definitions of the at least two objects may include a location that is different than a location that the third-party collision detection subsystem 128 predicts is the location of the collision between the at least two objects. For example, where a first object has a higher momentum than a second object, after a collision of the two objects, the two objects may move more in the direction indicated by the trajectory of the first object. The third-party collision detection subsystem 128 may calculate a location for the area of overlap, and the collision criterion may include a distance between the AV 100 and the calculated location of the area of the overlap.

In one implementation, the third-party collision detection subsystem 128 may predict a trajectory of the at least two objects after a predicted collision of the at least two objects. The collision criterion may include the trajectory of the at least two objects after the predicted collision intersecting a trajectory of the AV 100. Predicting the trajectory of the at least two objects after a collision may include the third-party collision detection subsystem 128 providing information about the collision of the at least two objects to a trajectory prediction subsystem of the data processing system 120. The trajectory prediction subsystem may calculate a trajectory of the at least two objects after the collision. The information about the collision may include the respective locations of the at least two objects at the collision, the location of the collision, the respective trajectories of the at least two objects, or other information that the trajectory prediction subsystem can use to predict a trajectory of the at least two objects after the collision. Responsive to the trajectory of the at least two objects intersecting the trajectory of the AV 100, the third-party collision detection subsystem 128 may cause the AVCS 140 to modify the operation of the AV 100 to avoid the area of overlap of the projected shape definitions of the at least two objects, which may avoid the trajectory of the at least two objects after the collision.

In some implementations, the third-party collision detection subsystem 128 may obtain a number of overlaps between the shape definitions of the at least two objects within a previous amount of time. The previous amount of time may include a predetermined number of time intervals. In one implementation, the third-party collision detection subsystem 128 may iteratively perform blocks 210-230 (obtaining one or more object indications, projecting the shape definitions forward by a time interval, and determining whether at least two projected shape definitions overlap, as discussed above). Each iteration of the performance of blocks 210-230 may be performed at a predetermined time interval (which may be the same as or may be different from the time interval of block 220). For example, the third-party collision detection subsystem 128 may perform an iteration of blocks 210-230 every 125 ms. At each iteration, the third-party collision detection subsystem 128 may determine whether the at least two projected shape definitions overlap. The at least two projected shape definitions overlapping for a single iteration may not be sufficient to predict that the at least two corresponding objects will collide (e.g., because of varying levels of accuracy of the data from the sensing system 110). However, the at least two projected shape definitions overlapping for multiple iterations may be sufficient to predict that the at least two corresponding objects will collide. The collision criterion may include the number of overlaps (e.g., the number of iterations indicating an overlap between the projected shape definitions) being above a threshold value. The threshold value may be 2, 3, 4, or 5 or more overlaps.

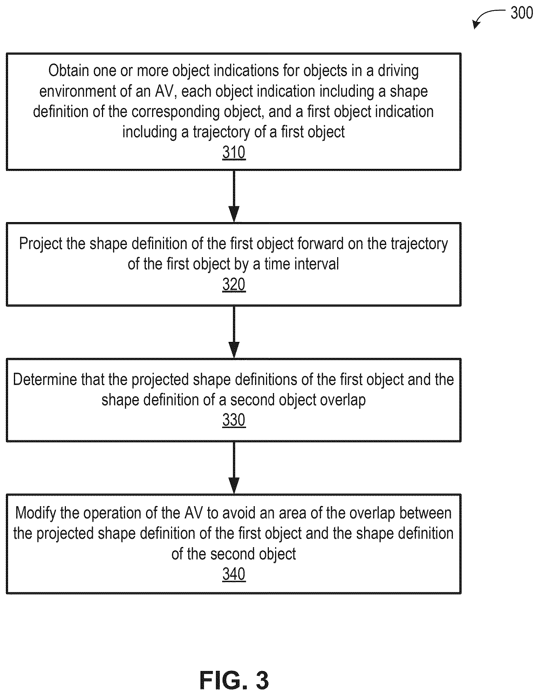

**FIG. 3** is a flowchart illustrating one embodiment of a method 300 for predicting third-party collisions for AVs, in accordance with some implementations of the present disclosure. A processing device, having one or more CPU(s), one or more GPU(s), and/or memory devices communicatively coupled to the CPU(s) and/or GPU(s), can perform the method 300 and/or each of their individual functions, routines, subroutines, or operations. The method 300 can be directed to systems and components of a vehicle. In some implementations, the vehicle can be an AV, such as the AV 100 of **FIG. 1****.** In some implementations, the vehicle can be a driver-operated vehicle equipped with driver assistance systems, e.g., Level 2 or Level 3 driver assistance systems, that provide limited assistance with specific vehicle systems (e.g., steering, braking, acceleration, etc. systems) or under limited driving conditions (e.g., highway driving). The method 300 can be used to improve performance of the AVCS 140. In certain implementations, a single processing thread can perform the method 300. Alternatively, two or more processing threads can perform the method 300, each thread executing one or more individual functions, routines, subroutines, or operations of the method 300. In an illustrative example, the processing threads implementing the method 300 can be synchronized (e.g., using semaphores, critical sections, and/or other thread synchronization mechanisms). Alternatively, the processing threads implementing the method 300 can be executed asynchronously with respect to each other. Various operations of the method 300 can be performed in a different (e.g., reversed) order compared with the order shown in **FIG. 3****.** Some operations of the method 300 can be performed concurrently with other operations. Some operations can be optional. In some implementations, the third-party collision detection subsystem 128 may perform the method 300.

At block 310, processing logic obtains one or more object indications for one or more objects in the driving environment 101 of the AV 100. Each object indication of the one or more object indications may include a shape definition of the corresponding object. A first object indication that corresponds to a first object of the one or more objects may include one or more predicted future locations of the first object. Block 310 may include operations similar to the operations of block 210 of the method 200. The shape definition of a corresponding object of the one or more objects may include a top-down polygon outline of the corresponding object. Some of the objects of the one or more objects may include objects that are stationary. An object indication corresponding to a stationary object may not include a predicted future location of the object.

At block 320, processing logic projects the shape definition of the first object into each predicted future location of the one or more predicted future locations of the first object. The operations of block 320 may be similar to the operations of block 220 of the method 200.

At block 330, processing logic determines that the projected shape definition of the first object and the shape definition of a second object of the one or more objects overlap. In one implementation, the first object may include a mobile object. The second object may include a stationary object. Since the second object may not have a trajectory, the third-party collision detection subsystem 128 may not project the shape definition of the second object on a trajectory of the second object. The operations of block 330 may be similar to the operations of block 230 of the method 200.

At block 340, processing logic determines whether the overlap between the projected shape definition of the first object and the shape definition of the second object (as determined in block 330) meets a collision criterion. Responsive to the overlap meeting the collision criterion, processing logic modifies the operation of the AV 100 to avoid an area of the projected shape definition of the first object and the shape definition of the second object. Modifying the operation of the AV 100 may include the third-party collision detection subsystem 128 providing a command to the AVCS 140 to avoid the area of the projected shape definition of the first object and the shape definition of the second object. The command may include the location, size, or other information about the area. The AVCS 140 may use the obstacle avoidance subsystem to modify a current driving path of the AV 100 to avoid the area.

In some implementations, the collision criterion may include a collision criterion similar to the collision criterion discussed above in relation to block 240 of the method 200. For example, the collision criterion may include a confidence value associated with the first object or the second object being above a threshold confidence value. The collision criterion may include a distance between the AV 100 and the area of the projected shape definition of the first object and the shape definition of the second object being less than a threshold distance. The collision criterion may include the projected shape definition of the first object and the shape definition of the second object overlapping by a threshold amount. In one implementation, the third-party collision detection subsystem 128 may predict a trajectory of the first object and the second object after a predicted collision of the two objects, and the collision criterion may include the trajectory intersecting a trajectory of the AV 100. In one or more implementations, the third-party collision detection subsystem 128 may obtain a number of overlaps between the projected shape definition of the first object and the shape definition of the second object within a previous amount of time, and the collision criterion may include the number of overlaps being above a threshold value.

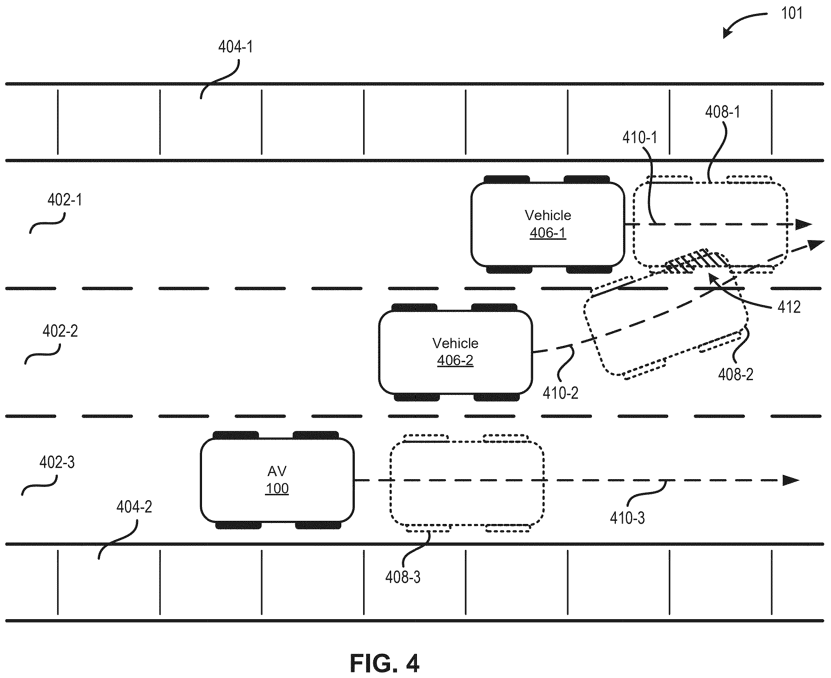

**FIG. 4** depicts a top-down view of an example driving environment 101, in accordance with some implementations of the present disclosure. The driving environment 101 may include the AV 100. The driving environment may include a road with one or more lanes 402. For example, as depicted in **FIG. 4****,** the road may include a first lane 402-1, a second lane 402-2, and a third lane 402-3. Each lane 402 in the example driving environment 101 may have the same direction of travel (in the example of **FIG. 4****,** from left to right). The first and second lanes 402-1 and 402-2 and the second and third lanes 402-2 and 402-3 may be separated by dashed lane markers indicating the edges of the lanes 402. The driving environment 101, on each respective side of the road that includes the lanes 402 may include a sidewalk 404-1 and 404-2.

The driving environment 101 may include the AV 100 driving in the third lane 402-3. The driving environment 101 may include a first vehicle 406-1 driving in the first lane 402-1 and a second vehicle 406-2 driving in the second lane 402-2. **FIG. 4** depicts a shape definition 408-1 for the first vehicle 406-1 projected onto a predicted future location of the first vehicle 406-1. In the example of **FIG. 4****,** the shape definition 408-1 is projected forward on a trajectory 410-1 of the first vehicle 406-1 by a time interval. **FIG. 4** also depicts a shape definition 408-2 for the second vehicle 406-2 projected forward on a trajectory 410-2 of the second vehicle by the time interval. **FIG. 4** also depicts a shape definition 408-3 for the AV 100 projected forward on a trajectory 410-3 of the AV 100 by the time interval.

As depicted in the example of **FIG. 4****,** at block 210 of the method 200, the third-party collision detection subsystem 128 of the AV 100 may obtain the shape definitions 408-1 and 408-2 and the predicted future locations (in this example, the trajectories 410-1 and 410-2) of the first and second vehicles 406-1 and 406-2 from other components of the data processing system 120 (e.g., the perception subsystem 126, a trajectory subsystem, or some other component). At block 220 of the method 200, the third-party collision detection subsystem 128 may project the shape definitions 408-1 and 408-2 onto the predicted future locations (e.g., forward on the first and second vehicle's 406-1 and 406-2 respective trajectories 410-1 and 410-2).

At block 230 of the method 200, the third-party collision detection subsystem 128 of the AV 100 may determine, based on the projected shape definitions 408-1 and 408-2 of the first and second vehicles 406-1 and 406-2, that the projected shape definitions 408-1 and 408-2 overlap. For example, as seen in **FIG. 4****,** the projected shape definitions 408-1 and 408-2 overlap in the area 412, marked by crosshatching. At block 240 of the method 200, the third-party collision detection subsystem 128 may determine whether the overlapping projected shape definitions 408-1 and 408-2 meet a collision criterion, and if so, the AVCS 140 of the AV 100 may modify the operation of the AV 100 to avoid the overlapping projected shape definitions 408-1 and 408-2. In the example of **FIG. 4****,** the collision criterion may include a confidence value associated with the first and second vehicles 406-1 and 406-2 being above a threshold confidence value. In the example of **FIG. 4****,** the AV 100 may have observed the behavior of the first and second vehicles 406-1 and 406-2 for a sufficient amount of time, and thus, a confidence value associated with the two vehicles 406-1 and 406-2 may be above a threshold amount. In response, the AVCS 140 may modify the operation of the AV 100 to avoid the overlapping projected shape definitions 408-1 and 408-2 by slowing the velocity of the AV 100 (e.g., to provide more time for the AV 100 to react to the predicted collision) and by keeping the AV 100 driving in the third lane 402-3.

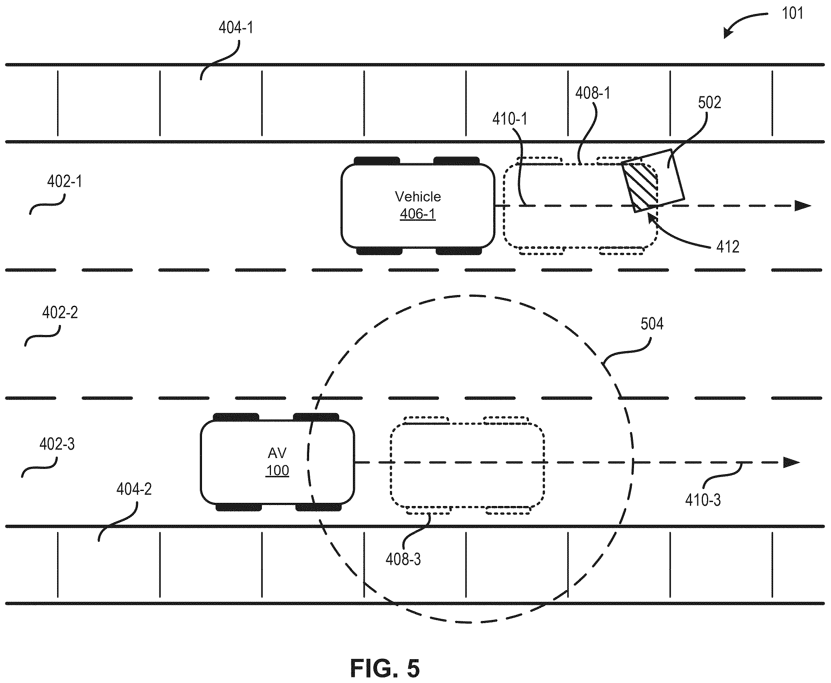

**FIG. 5** depicts a top-down view of another example driving environment 101, in accordance with some implementations of the present disclosure. The driving environment 101 may include one or more elements of the driving environment 101 of **FIG. 4****.** For example, the driving environment 101 of **FIG. 5** may include the AV 100; the three lanes 402-1, . . ., 402-3; the sidewalks 404-1 and 404-2; the first vehicle 406-1; the projected shape outline 408-1 and the trajectory 410-1 of the first vehicle 406-1; and the projected shape outline 408-3 and the trajectory 410-3 of the AV 100. In the example of **FIG. 5****,** the driving environment 101 may include a piece of road debris 502. For example, the road debris 502 may include a box that has fallen from a truck further ahead in the first lane 402-1 (not depicted in **FIG. 5**). The road debris 502 may be a stationary object.

At block 310 of the method 300, the third-party collision detection subsystem 128 of the AV 100 may obtain a shape definition 408-1 of the first vehicle 406-1, a predicted future location of the first vehicle 406-1 (in the example of **FIG. 5****,** the trajectory 410-1), and a shape definition of the road debris 502 (since the road debris is stationary, the shape definition may match the shape of the road debris 502 at the location of the road debris 502 and, thus, is not depicted separately in **FIG. 5**). At block 320 of the method 300, the third-party collision detection subsystem 128 may project the shape definition 408-1 of the first vehicle 406-1 onto a predicted future location of the first vehicle 406-1. In the example of **FIG. 5****,** the shape definition 408-1 is projected forward on the trajectory 410-1 of the first vehicle 406-1 by a time interval. At block 330 of the method 300, the third-party collision detection subsystem 128 may determine that the projected shape definition 408-1 of the first vehicle 406-1 and the shape definition of the road debris 502 overlap, as indicated by the area of overlap 412.

At block 340, the third-party collision detection subsystem 128 may determine whether the projected shape definition 408-1 of the first vehicle 406-1 and the shape definition of the road debris 502 meet a collision criterion. In the example of **FIG. 5****,** the collision criterion may include the distance between the AV 100 and the area of the projected shape definition 408-1 of the first vehicle 406-1 and the projected shape definition of the road debris 502 being less than a threshold distance. In **FIG. 5****,** the threshold distance is indicated by the circle 504 around the projected shape outline 408-3 of the AV 100. Since the area of overlap 412 is not within the threshold distance indicated by the circle 504, the collision criterion is not met, indicating that the predicted collision between the first vehicle 406-1 and the road debris 502 is not likely to affect the AV 100. In response to determining that the collision criterion is not met, the AVCS 140 may not modify the operation of the AV 100 to react to the predicted collision.

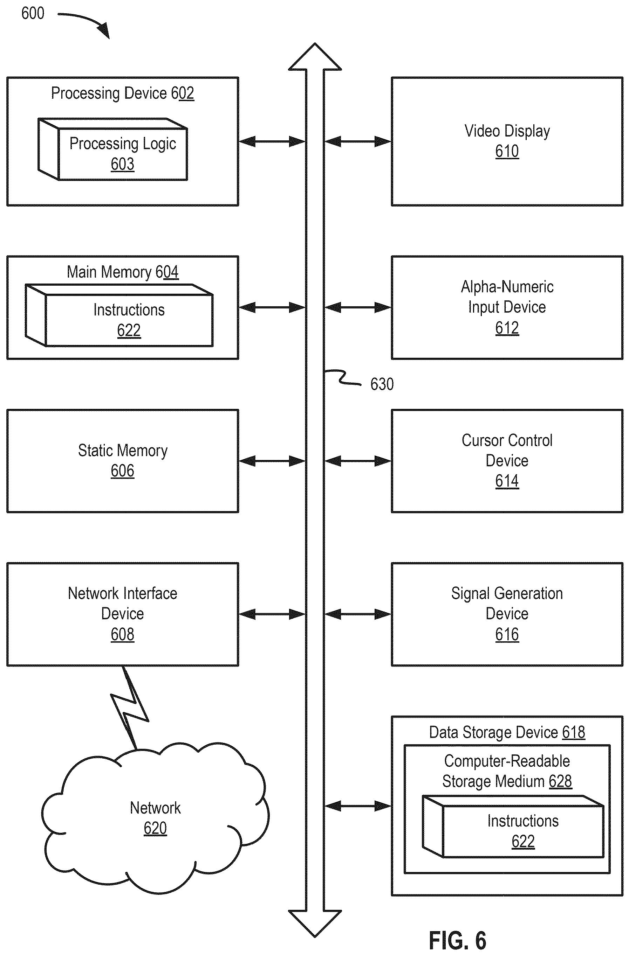

**FIG. 6** depicts a block diagram of an example computer device 600 capable of predicting third-party collisions for AVs 100, in accordance with some implementations of the present disclosure. The example computer device 600 can be connected to other computer devices in a local area network (LAN), an intranet, an extranet, and/or the Internet. The computer device 600 can operate in the capacity of a server in a client-server network environment. The computer device 600 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

The example computer device 600 can include a processing device 602 (also referred to as a processor or CPU), a main memory 604 (e.g., read-only memory (ROM), flash memory, dynamic random access memory (DRAM) such as synchronous DRAM (SDRAM), etc.), a static memory 606 (e.g., flash memory, static random access memory (SRAM), etc.), and a secondary memory (e.g., a data storage device 618), which can communicate with each other via a bus 630.

The processing device 602 (which can include processing logic 603) represents one or more general-purpose processing devices such as a microprocessor, CPU, or the like. More particularly, the processing device 602 can be a complex instruction set computing (CISC) microprocessor, reduced instruction set computing (RISC) microprocessor, very long instruction word (VLIW) microprocessor, processor implementing other instruction sets, or processors implementing a combination of instruction sets. The processing device 602 can also be one or more special-purpose processing devices such as a GPU, an application specific integrated circuit (ASIC), a field programmable gate array (FPGA), a digital signal processor (DSP), network processor, or the like. In accordance with one or more aspects of the present disclosure, the processing device 602 can be configured to execute instructions performing the methods 200 or 300, discussed above.

The example computer device 600 can further comprise a network interface device 608, which can be communicatively coupled to a network 620. A network interface device 608 may include a network card, a network interface controller, or some other network interface. The network 620 may include a LAN, an intranet, an extranet, the Internet, a modem, a router, a switch, or some other network or network device. In some embodiments, the computer device 600 may be in data communication with other systems or devices over the network 620. The example computer device 600 can further comprise a video display 610 (e.g., a liquid crystal display (LCD), a touch screen, or a cathode ray tube (CRT)), an alphanumeric input device 612 (e.g., a keyboard), a cursor control device 614 (e.g., a mouse), and an acoustic signal generation device 616 (e.g., a speaker).

The data storage device 618 can include a computer-readable storage medium 628 (or, more specifically, a non-transitory computer-readable storage medium) on which is stored one or more sets of executable instructions 622. In accordance with one or more aspects of the present disclosure, executable instructions 622 can include executable instructions performing the methods 200 or 300.

Executable instructions 622 can also reside, completely or at least partially, within the main memory 604 and/or within the processing device 602 during execution thereof by the example computer device 600, the main memory 604, and/or the processing device 602 also constituting computer-readable storage media. Executable instructions 622 can further be transmitted or received over a network via the network interface device 608.

While the computer-readable storage medium 628 is shown in **FIG. 6** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

In some cases, certain components of the AV 100 (e.g., the sensing system 110, the data processing system 120, the AVCS 140, or other components) may include a computer device 600.

To further illustrate aspects of the technology described herein, the following enumerated examples are provided:
Example 1. A method, comprising:
   obtaining a plurality of object indications for a plurality of objects in a driving environment of an autonomous vehicle (AV), wherein each object indication of the plurality of object indications comprises:
      a shape definition of the corresponding object of the plurality of objects, and
      one or more predicted future locations of the corresponding object;
   projecting, for each object of the plurality of objects, the shape definition of the corresponding object onto each predicted future location of the one or more predicted future locations of the corresponding object;
   determining, based on projected shape definitions of the plurality of objects, that projected shape definitions of at least two objects of the plurality of objects overlap; and
   responsive to an overlap between the projected shape definitions of the least two objects meeting a collision criterion, modifying operation of the AV to avoid an area of the overlapped projected shape definitions of the least two objects.
Example 2. The method of example 1, wherein each shape definition of the corresponding object of the plurality of objects comprises a top-down polygon outline of the corresponding object.
Example 3. The method of example 1, wherein the one or more predicted future locations of the corresponding object comprises a trajectory of the corresponding object.
Example 4. The method of example 1, wherein the collision criterion comprises a confidence value associated with an object of the at least two objects being above a threshold confidence value, wherein the confidence value indicates a level of confidence associated with at least one of:
   a predicted future location of the object; or
   a shape of the shape definition of the object.
Example 5. The method of example 1, wherein the collision criterion comprises the projected shape definitions of the at least two objects overlapping by a threshold amount.
Example 6. The method of example 1, wherein the collision criterion comprises a distance between the AV and the overlapped projected shape definitions of the least two objects being less than a threshold distance.
Example 7. The method of example 1, wherein:
   the method further comprises predicting a trajectory of the at least two objects after a predicted collision of the at least two objects; and
   the collision criterion comprises the trajectory of the at least two objects after the predicted collision intersecting a trajectory of the AV.
Example 8. The method of example 1, wherein:
   the method further comprises obtaining a number of overlaps between the projected shape definitions of the at least two objects within a previous amount of time; and
   the collision criterion comprises the number of overlaps being above a threshold value.
Example 9. A system, comprising:
   a memory; and
   a processing device, coupled with the memory, configured to perform operations comprising:
      obtaining a plurality of object indications for a plurality of objects in a driving environment of an autonomous vehicle (AV), wherein each object indication of the plurality of object indications comprises:
         a shape definition of the corresponding object of the plurality of objects,
            and
         one or more predicted future locations of the corresponding object, projecting, for each object of the plurality of objects, the shape definition of the corresponding object onto each predicted future location of the one or more predicted future locations of the corresponding object,
      determining, based on projected shape definitions of the plurality of objects, that projected shape definitions of at least two objects of the plurality of objects overlap, and
      responsive to an overlap between the projected shape definitions of the at least two objects meeting a collision criterion, modifying operation of the AV to avoid an area of the overlapped projected shape definitions of the at least two objects.
Example 10. The system of example 9, wherein each shape definition of the corresponding object of the plurality of objects comprises a top-down polygon outline of the corresponding object.
Example 11. The system of example 9, wherein the collision criterion comprises a confidence value associated with the at least two objects being above a threshold confidence value,
   wherein the confidence value indicates a level of confidence associated with at least one of:
   a predicted future location for each object of the at least two objects; or
   a shape of each projected shape definition of the projected shape definitions of the at least two objects.
Example 12. The system of example 9, wherein the collision criterion comprises the projected shape definitions of the at least two objects overlapping by a threshold amount.
Example 13. The system of example 9, wherein the collision criterion comprises a distance between the AV and the overlapped projected shape definitions of the least two objects being less than a threshold distance.
Example 14. The system of example 9, wherein:
   the operations further comprise predicting a trajectory of the at least two objects after a predicted collision of the at least two objects; and
   the collision criterion comprises the trajectory of the at least two objects after the predicted collision intersecting a trajectory of the AV.
Example 15. The system of example 9, wherein:
   the operations further comprise obtaining a number of overlaps between the shape definitions of the at least two objects within a previous amount of time; and
   the collision criterion comprises the number of overlaps being above a threshold value.
Example 16. A method, comprising:
   obtaining a plurality of object indications for a plurality of objects in a driving environment of an autonomous vehicle (AV), wherein:
      each object indication of the plurality of object indications comprises a shape definition of the corresponding object of the plurality of objects, and
      a first object indication of the plurality of object indications further comprises one or more predicted future locations of a first object of the plurality of objects;
   projecting the shape definition of the first object onto each predicted future location of the one or more predicted future locations of the first object;
   determining that the projected shape definition of the first object and the shape definition of a second object of the plurality of objects overlap; and
   responsive to the projected shape definition of the first object and the shape definition of the second object meeting a collision criterion, modifying operation of the AV to avoid an area of the projected shape definition of the first object and the shape definition of the second object.
Example 17. The method of example 16, wherein:
   the first object comprises a mobile object; and
   the second object comprises a stationary object.
Example 18. The method of example 16, wherein each shape definition of the corresponding object of the plurality of objects comprises a top-down polygon outline of the corresponding object.
Example 19. The method of example 16, wherein the collision criterion comprises a confidence value associated with at least one of the first object or the second object being above a threshold confidence value, wherein the confidence value indicates a level of confidence associated with at least one of:
   a predicted future location of the first object;
   a predicted future location of the second object;
   a shape of the projected shape definition the first object; or
   a shape of the projected shape definition the second object.
Example 20. The method of example 16, wherein the collision criterion comprises a distance between the AV and the area of the projected shape definition of the first object and the shape definition of the second object being less than a threshold distance.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "obtaining," "projecting," "determining," "modifying," "identifying," "generating," "calculating," "storing," "adjusting," "causing," "returning," "comparing," "creating," "stopping," "loading," "copying," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general-purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general-purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

## Claims

1. A computer-implemented method, comprising:
obtaining a plurality of object indications for a plurality of objects in a driving environment of an autonomous vehicle, AV, wherein each object indication of the plurality of object indications comprises:
a shape definition of the corresponding object of the plurality of objects, and
one or more predicted future locations of the corresponding object;
projecting, for each object of the plurality of objects, the shape definition of the corresponding object onto each predicted future location of the one or more predicted future locations of the corresponding object;
determining, based on projected shape definitions of the plurality of objects, that projected shape definitions of at least two objects of the plurality of objects overlap; and
responsive to an overlap between the projected shape definitions of the least two objects meeting a collision criterion, modifying operation of the AV to avoid an area of the overlapped projected shape definitions of the least two objects.

2. The method of claim 1, wherein each shape definition of the corresponding object of the plurality of objects comprises a top-down polygon outline of the corresponding object.

3. The method of claim 1 or claim 2, wherein the one or more predicted future locations of the corresponding object comprises a trajectory of the corresponding object.

4. The method of any preceding claim, wherein the collision criterion comprises a confidence value associated with an object of the at least two objects being above a threshold confidence value, wherein the confidence value indicates a level of confidence associated with at least one of:
a predicted future location of the object; or
a shape of the shape definition of the object.

5. The method of any of claims 1 to 3, wherein the collision criterion comprises a confidence value associated with the at least two objects being above a threshold confidence value, wherein the confidence value indicates a level of confidence associated with at least one of:
a predicted future location for each object of the at least two objects; or
a shape of each projected shape definition of the projected shape definitions of the at least two objects.

6. The method of any preceding claim, wherein the collision criterion comprises the projected shape definitions of the at least two objects overlapping by a threshold amount.

7. The method of any preceding claim, wherein the collision criterion comprises a distance between the AV and the overlapped projected shape definitions of the least two objects being less than a threshold distance.

8. The method of any preceding claim, wherein:
the method further comprises predicting a trajectory of the at least two objects after a predicted collision of the at least two objects; and
the collision criterion comprises the trajectory of the at least two objects after the predicted collision intersecting a trajectory of the AV.

9. The method of any preceding claim, wherein:
the method further comprises obtaining a number of overlaps between the projected shape definitions of the at least two objects within a previous amount of time; and
the collision criterion comprises the number of overlaps being above a threshold value.

10. A computer-implemented method, comprising:
obtaining a plurality of object indications for a plurality of objects in a driving environment of an autonomous vehicle (AV), wherein:
each object indication of the plurality of object indications comprises a shape definition of the corresponding object of the plurality of objects, and
a first object indication of the plurality of object indications further comprises one or more predicted future locations of a first object of the plurality of objects;
projecting the shape definition of the first object onto each predicted future location of the one or more predicted future locations of the first object;
determining that the projected shape definition of the first object and the shape definition of a second object of the plurality of objects overlap; and
responsive to the projected shape definition of the first object and the shape definition of the second object meeting a collision criterion, modifying operation of the AV to avoid an area of the projected shape definition of the first object and the shape definition of the second object.

11. The method of claim 10, wherein:
the first object comprises a mobile object; and
the second object comprises a stationary object.

12. The method of claim 10 or claim 11, wherein each shape definition of the corresponding object of the plurality of objects comprises a top-down polygon outline of the corresponding object.

13. The method of any one of claims 10 to 12, wherein the collision criterion comprises a confidence value associated with at least one of the first object or the second object being above a threshold confidence value, wherein the confidence value indicates a level of confidence associated with at least one of:
a predicted future location of the first object;
a predicted future location of the second object;
a shape of the projected shape definition the first object; or
a shape of the projected shape definition the second object.

14. The method of any one of claims 10 to 13, wherein the collision criterion comprises a distance between the AV and the area of the projected shape definition of the first object and the shape definition of the second object being less than a threshold distance.

15. A system, comprising:
a memory; and
a processing device, coupled with the memory, configured to perform the method of any preceding claim.
